# EUROPEAN PATENT SPECIFICATION

(11) **EP 4 443 767 B1**
(45) Date of publication and mention of the grant of the patent: **26.08.2026**
(21) Application number: 22915234.3
(22) Date of filing: 30.12.2022
(51) Int. Cl.: H04B 10/071, H04B 10/077

(54) **MULTIPATH INTERFERENCE DETECTION METHOD AND APPARATUS, AND OPTICAL MODULE AND COMMUNICATION DEVICE**
VERFAHREN UND VORRICHTUNG ZUR MEHRWEGINTERFERENZDETEKTION SOWIE OPTISCHES MODUL UND KOMMUNIKATIONSVORRICHTUNG
PROCÉDÉ ET APPAREIL DE DÉTECTION D'INTERFÉRENCE À TRAJETS MULTIPLES, ET MODULE OPTIQUE ET DISPOSITIF DE COMMUNICATION

(30) Priority: 31.12.2021 CN 202111664661
(43) Date of publication of application: 09.10.2024
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WANG, Dong, Beijing 100053 (CN); SUN, Jiang, Beijing 100053 (CN); CAI, Qian, Beijing 100053 (CN); ZHANG, Dechao, Beijing 100053 (CN); LI, Han, Beijing 100053 (CN)
(74) Representative: J A Kemp LLP
(86) International application number: PCT/CN2022/144208
(87) International publication number: WO 2023/125987

(56) References cited:
- WO-A1-03/102530
- CN-A- 105 450 293
- CN-A- 107 104 725
- CN-A- 112 586 013
- JP-A- 2009 141 553
- US-A1- 2014 029 934
- HEISMANN F ET AL: "Signal Tracking And Performance Monitoring In Multi-wavelength Optical Networks", 19960915; 19960915 - 19960919, vol. 3, 15 September 1996 (1996-09-15), pages 47 - 50, XP010303119

## Description

### TECHNICAL FIELD

The disclosure relates to the field of optical fiber communication technology, and in particular, to an optical back-reflection detection method and apparatus in the optical fiber communication, an optical module in the optical fiber communication, and a communication device in the optical fiber communication.

### BACKGROUND

In the backhaul access layer network of the 5th generation mobile communication technology (5G), 50 Gb/s Pulse Amplitude Modulation-4 (PAM4) optical modules have been deployed on a large scale. Due to the reflected light interference at the link connection point, there is a phenomenon that opening can not be normally performed, or a phenomenon that a burst error occurs during the operation. Specifically, in the opening stage, the optical power is normal, but the port can not be open, which may be solved by cleaning the optical connector hop by hop in the opening stage. After the opening, it is found during a maintenance that service rerouting frequently occurs, which is located as the error code in the 50 Gb/s PAM4 link is too large. A 200 Gb/s optical module using 25 GBd PAM4 operates normally in the convergence and core layer, the cross connecting cabinet for communication optical cable is located indoors, and the optical cable cross connect cabinet of the access layer is located outdoors.

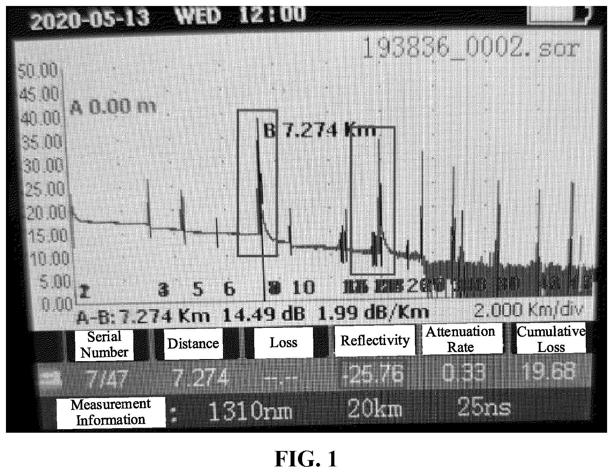

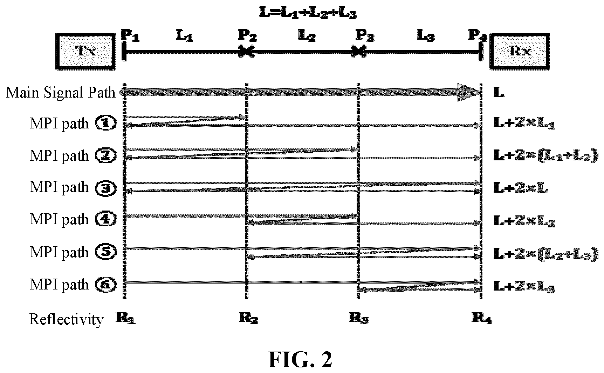

The link with a problem is troubleshot, and it is found that there are high-reflection optical connection points in the access ring. As shown in FIG. 1, the reflectivity of some connection points reaches -15dB or -25dB. Therefore, it is determined that the failure of the access layer link using 50Gb/s PAM4 optical modules is mainly caused by the excessive reflected light at the optical connection points in the link. A reflection process of the optical connection points in the link is shown in FIG. 2.

In the related art, the influence of the reflected light of 50Gb/s PAM4 optical modules has been stipulated. That is, the sum of the losses of all the connection points in the link is less than 2dB, and the upper limit of the return loss of the optical connection points varies according to the number of connection points.

However, how to quickly detect the occurrence of MPI is an urgent problem to be solved. Related technologies can be found at least in patent documents US2014/029934A1 and CN105450293A.

### SUMMARY

To solve the related technical problems, embodiments of the disclosure provide an MPI detection method and apparatus, an optical module, and a communication device.

The present invention is set out in the appended set of claims.

In the embodiments of the disclosure, the first optical module may determine whether the MPI occurs by whether a frequency other than the first frequency corresponding to the first information may be detected from the first signal. Online real-time monitoring, of whether MPI caused by transmission occurs in the line, is supported, and rapid failure positioning of MPI problems is implemented, which may at least solve the problem of how to quickly detect the occurrence of the MPI.

### BRIEF DESCRIPTION OF THE DRAWINGS

Various other advantages and benefits will become clear to those of ordinary skill in the art by reading the detailed description of the preferred implementations below. The drawings are used only for the purpose of illustrating the preferred implementations, and are not considered as a limitation on the disclosure. Furthermore, the same reference symbol is used to represent the same component throughout the drawings.
FIG. 1 is a test diagram of a high-reflection point in a link.
FIG. 2 is a schematic diagram of a reflection process of optical connection points in a link.
FIG. 3 is a flowchart of an MPI detection method of an embodiment of the disclosure.
FIG. 4 is a schematic diagram of an MPI detection apparatus of an embodiment of the disclosure.
FIG. 5 is a schematic diagram of a method supporting MPI detection provided by an embodiment of the disclosure.
FIG. 6 is a schematic diagram of an optical module of an embodiment of the disclosure.
FIG. 7 is a schematic diagram of a communication device of an embodiment of the disclosure.
FIG. 8 is a schematic diagram of a scenario where a frequency identifier is not reflected.
FIG. 9 is a schematic diagram of a scenario where a frequency identifier is reflected.
FIG. 10 is a schematic diagram of an occurrence of MPI in a link.

### DETAILED DESCRIPTION

The technical solutions in the embodiments of the disclosure will be described clearly and completely below in combination with the drawings in the embodiments of the disclosure. It is apparent that the described embodiments are a part of the embodiments of the disclosure and not all of the embodiments. Based on the embodiments of the disclosure, all other embodiments obtained by those of ordinary skill in the art without making creative labor fall within the scope of protection of the disclosure.

The term "include" in the specification and claims of the disclosure, and any variations thereof, are intended to cover non-exclusive inclusion, e.g., a process, method, system, product or device including a series of operations or units need not to be limited to those operations or units that are clearly listed, but may include other operations or units that are not clearly listed, or that are inherent to those processes, methods, products or devices. In addition, the term "and/or" used in the specification and claims represents at least one of connected objects. For example, "A and/or B" represents an inclusion of A alone, an inclusion of B alone, and an existence of both A and B.

In the embodiments of the disclosure, the expression "exemplary" or "for example" is used to indicate an example, exemplification or illustration. Any embodiment or design solution described as "exemplary" or "for example" in the embodiments of the disclosure should not be interpreted as being more preferred or advantageous than other embodiments or design solutions. To be precise, the use of the expression "exemplary" or "for example" is intended to present relevant concepts in a specific manner.

It is to be noted that technologies described in the embodiments of the disclosure are not limited to a Long Term Evolution (LTE) or an LTE-Advanced (LTE-A) system, but may further be applied to other wireless communication systems, such as a Code Division Multiple Access (CDMA), a Time Division Multiple Access (TDMA), a Frequency Division Multiple Access (FDMA), an Orthogonal Frequency Division Multiple Access (OFDMA), a Single-carrier Frequency-Division Multiple Access (SC-FDMA), and other systems. The terms "system" and "network" are often used interchangeably in the embodiments of the disclosure. The described technologies may be applied to the aforementioned systems and radio technologies, and may also be applied to other systems and radio technologies. However, the following description describes a New Radio (NR) system for example purposes, and NR terms are used throughout most of the following description, although these technologies may also be applied to applications other than an NR system application, such as a 6th Generation mobile communication technology (6G) communication system.

An Optical Time-Domain Reflectometer (OTDR) may be manually carried for segment-by-segment detection and troubleshooting, and the MPI problem may be determined. However, an engineer familiar with operating the instrument is required to go to the site for segment-by-segment detection, which is time-consuming and there are certain requirements for personnel. In addition, since the cost of the OTDR is high, it is seldom equipped for the operation and maintenance team of the access layer network, and it is difficult to meet the demand of the whole network.

For a multi-carrier frequency Operation Administration and Maintenance (OAM) management solution, low-speed modulation is added to an optical module, which has a small change and a small increase in the power consumption, is transparent to services, and does not involve service data processing. However, since multiple carrier frequencies carry different OAM information, during the OAM demodulation process, there are certain requirements on the computing capability of the chip. Generally, the demodulation unit is disposed externally in a separate board, rather than integrated in the optical module. In addition, the problem of MPI detection is not considered in the OAM management of this solution.

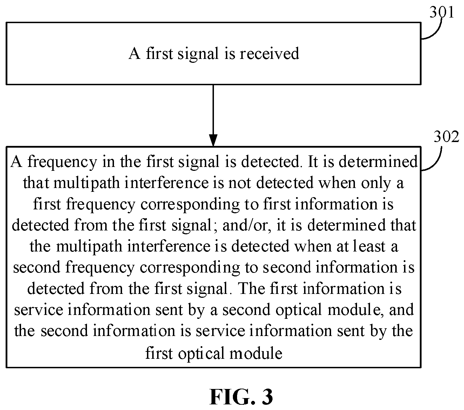

Referring to FIG. 3, an embodiment of the disclosure provides an MPI detection method applied to a first optical module, that is, the execution body of the method includes the first optical module. The specific operations are as follows.

In operation 301, a first signal is received.

In operation 302, a frequency in the first signal is detected. It is determined that MPI is not detected when only a first frequency corresponding to first information is detected from the first signal; and/or it is determined that the MPI is detected when at least a second frequency corresponding to second information is detected from the first signal. The first information is service information sent by a second optical module, and the second information is service information sent by the first optical module.

In an implementation of the disclosure, in the operation 301, the first optical module receives the first signal directly from the second optical module, or the first optical module receives the first signal from the second optical module reflected by the intermediate link.

In the operation 302, it may be understood that the first frequency is different from the second frequency. The first optical module may determine whether the MPI occurs by whether a frequency other than the first frequency corresponding to the first information may be detected from the first signal.

When the first optical module detects only the first frequency corresponding to the first information from the first signal, it means that connectors or components in the optical fiber link do not reflect the service information sent by the first optical module to the first optical module.

When the first optical module detects at least the second frequency corresponding to the second information from the first signal, it means that the connectors or components in the optical fiber link reflect the service information of the first optical module to the first optical module. In such case, it may be determined that the MPI is detected.

In an implementation of the disclosure, the first signal includes an optical signal with the first frequency that is loaded on the first information, or the first signal includes the optical signal with the first frequency that is load on the first information, and an optical signal with the second frequency that is loaded on the second information.

In an implementation of the disclosure, the operation that it is determined that the MPI is not detected when only the first frequency corresponding to the first information is detected from the first signal; and/or it is determined that the MPI is detected when at least the second frequency corresponding to the second information is detected from the first signal includes the following operations.

The first signal is converted from an optical signal into an electrical signal.

The first signal is parsed to obtain a low frequency signal. The low frequency signal is a signal with a frequency lower than a frequency of service information.

It is determined that the MPI is not detected when the frequency of the low frequency signal only includes the first frequency; and/or it is determined that the MPI is detected when the frequency of the low frequency signal includes at least the second frequency.

The low frequency signal in the embodiment of the disclosure may be a signal at k Hz or M Hz, which, of course, is not limited thereto.

In an implementation of the disclosure, in case that it is determined that the MPI is detected, the method further includes the following operation.

An intensity of the MPI is determined according to the detected second frequency of the second information.

In an implementation of the disclosure, the method further includes the following operation.

A detection result is sent to a network management system. The detection result includes that the MPI is not detected or the MPI is detected.

In the embodiment of the disclosure, the first optical module may determine whether the MPI occurs by whether a frequency other than the first frequency corresponding to the first information may be detected from the first signal. Online real-time monitoring, of whether MPI caused by transmission occurs in the line, is supported, and rapid failure positioning of MPI problems is implemented, which may at least solve the problem of how to quickly detect the occurrence of the MPI.

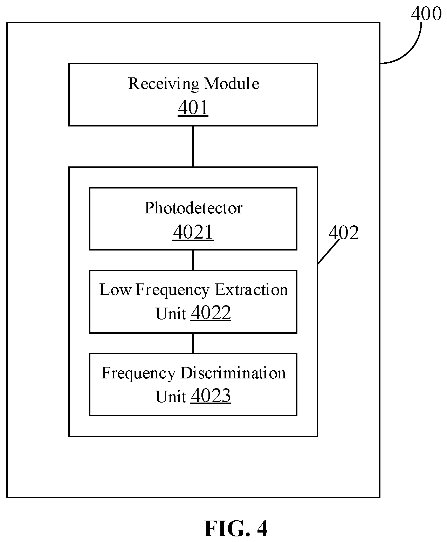

Referring to FIG. 4, an embodiment of the disclosure provides an MPI detection apparatus applied to a first optical module, The apparatus 400 includes a receiving module 401 and a detection module 402.

The receiving module 401 is configured to receive a first signal.

The detection module 402 is configured to detect a frequency in the first signal. It is determined that MPI is not detected when only a first frequency corresponding to first information is detected from the first signal; and/or it is determined that the MPI is detected when at least a second frequency corresponding to second information is detected from the first signal. The first information is service information sent by a second optical module, and the second information is service information sent by the first optical module.

In an implementation of the disclosure, the first signal includes an optical signal with the first frequency that is loaded on the first information, or the first signal includes the optical signal with the first frequency that is load on the first information, and an optical signal with the second frequency that is loaded on the second information.

In an implementation of the disclosure, the apparatus further includes a calculation module.

The calculation module is configured to determine (which may also be understood as calculating) an intensity of the MPI according to the detected second frequency of the second information.

In an implementation of the disclosure, the apparatus further includes a control module.

The control module is configured to send a detection result to a network management system. The detection result includes that the MPI is not detected or the MPI is detected.

In an implementation of the disclosure, the detection module 402 includes a photodetector 4021, a low frequency extraction unit 4022 and a frequency discrimination unit 4023.

The photodetector 4021 is configured to convert the first signal from an optical signal into an electrical signal.

The low frequency extraction unit 4022 is configured to parse the first signal to obtain a low frequency signal. The low frequency signal is a signal with a frequency lower than a frequency of service information.

The frequency discrimination unit 4023 is configured to determine that the MPI is not detected when the frequency of the low frequency signal only includes the first frequency; and/or determine that the MPI is detected when the frequency of the low frequency signal includes at least the second frequency.

In the embodiments of the disclosure, online real-time monitoring, of whether MPI caused by transmission occurs in the line, is supported, and rapid failure positioning of MPI problems is implemented.

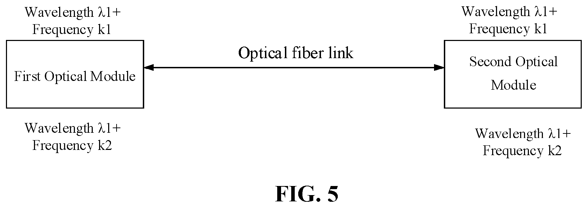

Referring to FIG. 5, in a sending unit of the optical module, an identifier of the low frequency signal is loaded in the service information. Optical modules at both ends adopt different frequency identifiers, and wavelengths carrying service information are the same and low frequency signals with different frequencies of k1 and k2 are superimposed respectively. The low frequency signals with the frequencies of k1 and k2 correspond one-to-one with the first optical module and the second optical module. In this way, when the frequency of k1 or the frequency of k2 is detected, it may be determined that the information comes from the first optical module or the second optical module. The pilot tone modulation is only used to load the frequency identifiers, and it is not necessary to generate OAM information and frame formats, which simplifies functions and requirements of the Microcontroller Unit (MCU).

Key units, which include but are not limited to, a low frequency extraction unit and a frequency discrimination unit, are required to be added at the receiving end of the optical module, as shown in FIG. 4. An optical signal enters the receiving end of the optical module, and conversion from the optical signal into an electrical signal is completed by a photodetector. Then, a low frequency signal, such as a low frequency signal with a frequency of k1 or k2, is obtained from parsing by the low frequency extraction unit. Then, frequencies included in the low frequency signal, and whether MPI exists, are determined by the frequency discrimination unit. The occurrence and intensity of the MPI may be determined by determining whether a locally sent frequency is received.

Exemplarily, service information in the first optical module is loaded with a low frequency signal whose frequency identifier is k1, and service information in the second optical module is loaded with a low frequency signal whose frequency identifier is k2. Therefore, the first optical module sends the service information loaded with the low frequency signal whose frequency identifier is k1, and receives the service information loaded with the low frequency signal whose frequency identifier is k2. The second optical module sends the service information loaded with the low frequency signal whose frequency identifier is k2, and receives the service information loaded with the low frequency signal whose frequency identifier is k1.

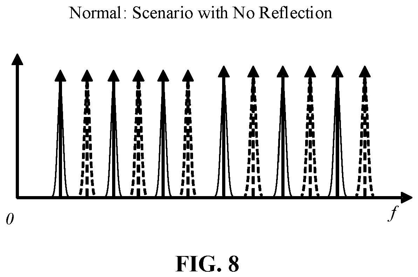

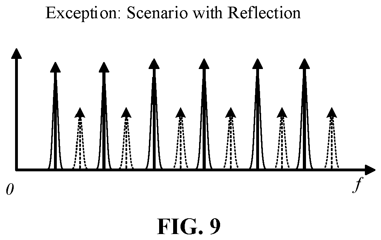

If the MPI occurs, the receiving end of the first optical module will simultaneously receive the service information loaded with the low frequency signal whose frequency identifier is k1 and the service information loaded with the low frequency signal whose frequency identifier is k2. The low frequency signals with the frequencies of k1 and k2 will be obtained from parsing by the low frequency extraction unit. Then, it is detected by the frequency discrimination unit that, in addition to the low frequency signal with the frequency of k2 that should be normally received, the low frequency signal with the frequency of k1, i.e., the frequency identifier corresponding to the information sent by the first optical module, is also received. It means that the information is reflected in the link and then enters the receiving end of the first optical module, as shown in FIG. 8 and FIG. 9.

It may be understood that the receiving end of the second optical module will also simultaneously receive the service information loaded with the low frequency signal whose frequency identifier is k1 and the service information loaded with the low frequency signal whose frequency identifier is k2. The low frequency signals with the frequencies of k1 and k2 will be obtained from parsing by the low frequency extraction unit. Then, it is detected by the frequency discrimination unit that, in addition to the low frequency signal with the frequency of k1 that should be normally received, the low frequency signal with the frequency of k2, i.e., the frequency identifier corresponding to the information sent by the second optical module, is also received. It means that the information is reflected in the link and then enters the receiving end of the second optical module.

If no MPI or very little MPI occurs, the frequency discrimination unit of the first optical module may only detect the low frequency signal with the frequency of k2 that should be normally received, and can not detect the low frequency signal with the frequency of k1 that should not be received. And/or the frequency discrimination unit of the second optical module may only detect the low frequency signal with the frequency of k1 that should be normally received, and can not detect the low frequency signal with the frequency of k2 that should not be received.

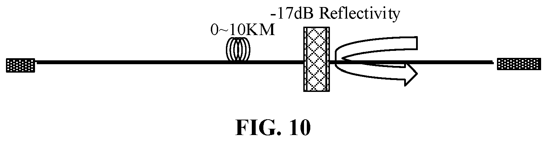

The workflow of the method is as follows.
1. The first optical module sends the service information that is superimposed with the identifier of the frequency of k1.
2. The second optical module sends the service information that is superimposed with the identifier of the frequency of k2.
3. Under a normal condition, the first optical module extracts the identifier of the frequency of k2 from the received service information.
4. In case that the MPI exists, as shown in FIG. 10, the information carrying the identifier of the frequency of k1, which is sent by the first optical module, is received by the first optical module after transmission, and at the same time, the service information sent by the second optical module is normally received. That is, the first optical module receives simultaneously the information carrying the identifier of the frequency of k1 and the information carrying the identifier of the frequency of k2. After optoelectronic signal conversion performed by the photodetector, the low frequency information is extracted by the frequency extraction unit, and two signals with different frequencies of k1 and k2 exist in the electric domain. The frequency and intensity of the occurrence of the MPI are detected by the frequency discrimination unit.
5. The optical module sends discrimination information to the master control unit of the device, and further to the network management system.

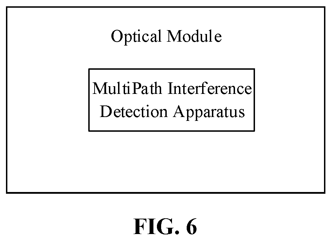

Referring to FIG. 6, an embodiment of the disclosure provides an optical module including the MPI detection apparatus as shown in FIG. 4.

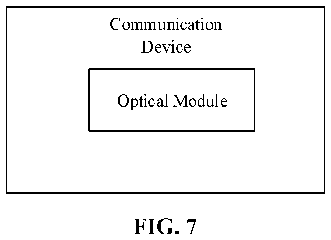

Referring to FIG. 7, an embodiment of the disclosure provides a communication device including the optical module as shown in FIG. 6.

Operations of the method or algorithm described in combination with the disclosed content of the disclosure may be implemented by hardware, or by executing software instructions in a processor. The software instructions may consist of corresponding software modules, and the software modules may be stored in a Random Access Memory (RAM), a flash memory, a Read-Only Memory (ROM), an Erasable Programmable Read-Only Memory (EPROM), an Electrically Erasable Programmable Read-Only Memory (EEPROM), a register, a hard disk, a mobile hard disk, a CD-ROM, or any other form of storage medium well known in the art. An exemplary storage medium is coupled to a processor such that the processor may read information from the storage medium and may write information into the storage medium. Of course, the storage medium may also be a part of the processor. The processor and the storage medium may be carried in an Application Specific Integrated Circuit (ASIC). Alternatively, the ASIC may be carried in a core network interface device. Of course, the processor and the storage medium may also exist in the core network interface device as discrete components.

It should be realized by those skilled in the art that, in one or more of the aforementioned examples, functions described in the disclosure may be implemented by hardware, software, firmware, or any combination thereof. When implemented by software, these functions may be stored in a computer-readable medium, or transmitted as one or more instructions or codes on the computer-readable medium. The computer-readable medium includes a computer storage medium and a communication medium, and the communication medium includes any medium that facilitates transmitting a computer program from one location to another. The storage medium may be any available medium that a general purpose computer or a specialized computer may access.

The aforementioned specific implementations provide a further detailed illustration of the purpose, technical solutions and beneficial effects of the disclosure. It is to be understood that the above are only specific implementations of the disclosure, and are not used to limit the scope of protection of the disclosure. Any modifications, equivalent replacements, improvements, or the like, made on the basis of the technical solutions of the disclosure, shall be included in the scope of protection of the disclosure.

It is to be understood by those skilled in the art that the embodiments of the disclosure may be provided as methods, systems, or computer program products. Accordingly, the embodiments of the disclosure may be in the form of fully hardware embodiments, fully software embodiments, or embodiments combining software and hardware. Furthermore, the embodiments of the disclosure may be in the form of a computer program product implemented on one or more computer-usable storage media (which include but are not limited to a disk memory, a CD-ROM, an optical memory, or the like) including computer-usable program codes therein.

The embodiments of the disclosure are described with reference to flowcharts and/or block diagrams of methods, devices (systems), and computer program products according to the embodiments of the disclosure. It is to be understood that each of the flows and/or blocks in the flowchart and/or the block diagram, and flows and/or an embedded processor or a processor of other programmable data processing devices in the flowchart and/or the block diagram, may be implemented by computer program instructions to generate a machine, such that instructions executed by a processor of a computer or other programmable data processing devices generate an apparatus for implementing functions specified in one or more flows in the flowchart and/or one or more blocks in the block diagram.

These computer program instructions may also be stored in a computer-readable memory capable of guiding the computer or other programmable data processing devices to operate in a particular manner, such that instructions stored in the computer-readable memory generate a manufactured product including an instruction apparatus, and the instruction apparatus implements functions specified in one or more flows in the flowchart and/or one or more blocks in the block diagram.

These computer program instructions may also be loaded into a computer or other programmable data processing devices, such that a series of operation steps are performed on the computer or other programmable devices to generate computer-implemented processing, and thereby instructions executed on the computer or other programmable devices provide steps for implementing functions specified in one or more flows in the flowchart and/or one or more blocks in the block diagram.

## Claims

1. An optical back-reflection detection method in an optical fiber communication, applied to a first optical module, comprising:
receiving (301) a first signal;
converting the first signal from an optical signal into an electrical signal;
obtaining a low frequency signal from the first signal;
determining (302) that optical back-reflection is not detected, when a frequency of the low frequency signal comprises only a first frequency corresponding to first information; and determining (302) that the optical back-reflection is detected, when the frequency of the low frequency signal comprises at least said first frequency and a second frequency corresponding to second information;
**characterized in that** the first information is service information received by the first optical module from a second optical module, and the second information is service information sent by the first optical module, and a same wavelength is used for first optical module to receive the first information and send the second information;
wherein the first optical module receives a low frequency signal with the first frequency and sends a low frequency signal with the second frequency; and wherein the low frequency signals are signals with a frequency lower than a frequency of service information.

2. The method of claim 1, wherein the converted first signal comprises a converted optical signal that is of the first frequency and is loaded on the first information, or the converted first signal comprises the converted optical signal that is of the first frequency and is load on the first information, and a converted optical signal that is of the second frequency and is loaded on the second information.

3. The method of claim 1, further comprising:
sending a detection result to a network management system, wherein the detection result comprises that the optical back-reflection is not detected or the optical back-reflection is detected.

4. An optical back-reflection detection apparatus (400) in an optical fiber communication, applied to a first optical module, comprising:
a receiving module (401), configured to receive a first signal; and
a detection module (402), configured to:
convert the first signal from an optical signal into an electrical signal;
obtain a low frequency signal from the first signal;
wherein it is determined that optical back-reflection is not detected, when a frequency of the low frequency signal comprises only a first frequency corresponding to first information; and it is determined that the optical back-reflection is detected, when the frequency of the low frequency signal comprises at least said first frequency and a second frequency corresponding to second information;
**characterized in that** the first information is service information received by the first optical module from a second optical module, and the second information is service information sent by the first optical module, and a same wavelength is used for first optical module to receive the first information and send the second information; wherein the first optical module is configured to receive a low frequency signal with the first frequency and send a low frequency signal with the second frequency; and wherein the low frequency signals are signals with a frequency lower than a frequency of service information.

5. The apparatus of claim 4, wherein the converted first signal comprises a converted optical signal that is of the first frequency and is loaded on the first information, or the converted first signal comprises the converted optical signal that is of the first frequency and is load on the first information, and a converted optical signal that is of the second frequency and is loaded on the second information.

6. The apparatus of claim 4, further comprising:
a control module, configured to send a detection result to a network management system, wherein the detection result comprises that the optical back-reflection is not detected or the optical back-reflection is detected.

7. An optical module in an optical fiber communication comprising the optical back-reflection detection apparatus of any one of claims 4-6.

8. A communication device in an optical fiber communication comprising the optical module of claim 7.

## Patentansprüche

1. Verfahren für eine Erfassung optischer Rückreflexion in einer optischen Faserkommunikation, die auf ein erstes optisches Modul angewendet wird, umfassend:
Empfangen (301) eines ersten Signals;
Umwandeln des ersten Signals von einem optischen Signal in ein elektrisches Signal;
Erhalten eines Niederfrequenzsignals aus dem ersten Signal;
Bestimmen (302), dass keine optische Rückreflexion erfasst wird, wenn eine Frequenz des Niederfrequenzsignals nur eine erste Frequenz, die ersten Informationen entspricht, umfasst; und Bestimmen (302), dass die optische Rückreflexion erfasst wird, wenn die Frequenz des Niederfrequenzsignals mindestens eine zweite Frequenz, die zweiten Informationen entspricht, umfasst;
**dadurch gekennzeichnet, dass** die ersten Informationen Dienstinformationen, die durch das erste optische Modul von einem zweiten optischen Modul empfangen werden, sind und die zweiten Informationen Dienstinformationen, die durch das erste optische Modul gesendet werden, sind und eine gleiche Wellenlänge für das erste optische Modul verwendet wird, um die ersten Informationen zu empfangen und die zweiten Informationen zu senden;
wobei das erste optische Modul konfiguriert ist, um ein Niederfrequenzsignal mit der ersten Frequenz zu empfangen und ein Niederfrequenzsignal mit der zweiten Frequenz zu senden.

2. Verfahren nach Anspruch 1, wobei das umgewandelte erste Signal ein umgewandeltes optisches Signal umfasst, das von der ersten Frequenz ist und auf die ersten Informationen geladen ist, oder das umgewandelte erste Signal das umgewandelte optische Signal, das von der ersten Frequenz ist und auf die ersten Informationen geladen ist, und ein umgewandeltes optisches Signal umfasst, das von der zweiten Frequenz ist und auf die zweiten Informationen geladen ist.

3. Verfahren nach Anspruch 1, ferner umfassend:
Senden eines Erfassungsergebnisses an ein Netzwerkverwaltungssystem, wobei das Erfassungsergebnis umfasst, dass die optische Rückreflexion nicht erfasst wird oder die optische Rückreflexion erfasst wird.

4. Einrichtung (400) für die Erfassung optischer Rückreflexion in einer optischen Faserkommunikation, die auf ein erstes optisches Modul angewendet wird, umfassend:
ein Empfangsmodul (401), das konfiguriert ist, um ein erstes Signal zu empfangen; und
ein Erfassungsmodul (402), das konfiguriert ist zum:
Umwandeln des ersten Signals von einem optischen Signal in ein elektrisches Signal;
Erhalten eines Niederfrequenzsignals aus dem ersten Signal;
wobei bestimmt wird, dass optische Rückreflexion nicht erfasst wird, wenn eine Frequenz des Niederfrequenzsignals nur eine erste Frequenz, die ersten Informationen entspricht, umfasst; und bestimmt wird, dass die optische Rückreflexion erfasst wird, wenn die Frequenz des Niederfrequenzsignals mindestens eine zweite Frequenz, die zweiten Informationen entspricht, umfasst;
**dadurch gekennzeichnet, dass** die ersten Informationen Dienstinformationen, die durch das erste optische Modul von einem zweiten optischen Modul empfangen werden, sind und die zweiten Informationen Dienstinformationen, die durch das erste optische Modul gesendet werden, sind und eine gleiche Wellenlänge für das erste optische Modul verwendet wird, um die ersten Informationen zu empfangen und die zweiten Informationen zu senden; wobei das erste optische Modul konfiguriert ist, um ein Niederfrequenzsignal mit der ersten Frequenz zu empfangen und ein Niederfrequenzsignal mit der zweiten Frequenz zu senden.

5. Einrichtung nach Anspruch 4, wobei das umgewandelte erste Signal ein umgewandeltes optisches Signal umfasst, das von der ersten Frequenz ist und auf die ersten Informationen geladen ist, oder das umgewandelte erste Signal das umgewandelte optische Signal, das von der ersten Frequenz ist und auf die ersten Informationen geladen, und ein umgewandeltes optisches Signal umfasst, das von der zweiten Frequenz ist und auf die zweiten Informationen geladen ist.

6. Einrichtung nach Anspruch 4, ferner umfassend:
ein Steuermodul, das konfiguriert ist, um ein Erfassungsergebnis an ein Netzwerkverwaltungssystem zu senden, wobei das Erfassungsergebnis umfasst, dass die optische Rückreflexion nicht erfasst wird oder die optische Rückreflexion erfasst wird.

7. Optisches Modul in einer optischen Faserkommunikation, umfassend die Einrichtung für die Erfassung optischer Rückreflexion nach einem der Ansprüche 4 bis 6.

8. Kommunikationsvorrichtung in einer optischen Faserkommunikation, umfassend das optische Modul nach Anspruch 7.

## Revendications

1. Procédé de détection de rétroréflexion optique dans une communication par fibre optique, appliqué à un premier module optique, comprenant :
la réception (301) d'un premier signal ;
la conversion du premier signal d'un signal optique en un signal électrique ;
l'obtention d'un signal basse fréquence à partir du premier signal ;
le fait de déterminer (302) qu'une rétroréflexion optique n'est pas détectée, lorsqu'une fréquence du signal basse fréquence ne comprend qu'une première fréquence correspondant à de premières informations ; et le fait de déterminer (302) que la rétroréflexion optique est détectée, lorsque la fréquence du signal basse fréquence comprend au moins une seconde fréquence correspondant à de secondes informations ;
**caractérisé en ce que** les premières informations sont des informations de service reçues par le premier module optique à partir d'un second module optique, et les secondes informations sont des informations de service envoyées par le premier module optique, et une même longueur d'onde est utilisée pour le premier module optique afin de recevoir les premières informations et envoyer les secondes informations ;
dans lequel le premier module optique est configuré pour recevoir un signal basse fréquence avec la première fréquence et envoyer un signal basse fréquence avec la seconde fréquence.

2. Procédé selon la revendication 1, dans lequel le premier signal converti comprend un signal optique converti qui est de la première fréquence et qui est chargé sur les premières informations, ou le premier signal converti comprend le signal optique converti qui est de la première fréquence et qui est chargé sur les premières informations, et un signal optique converti qui est de la seconde fréquence et qui est chargé sur les secondes informations.

3. Procédé selon la revendication 1, comprenant en outre :
l'envoi d'un résultat de détection à un système de gestion de réseau, dans lequel le résultat de détection comprend le fait que la rétroréflexion optique n'est pas détectée ou que la rétroréflexion optique est détectée.

4. Appareil de détection de rétroréflexion optique (400) dans une communication par fibre optique, appliqué à un premier module optique, comprenant :
un module de réception (401), configuré pour recevoir un premier signal ; et
un module de détection (402), configuré pour :
convertir le premier signal d'un signal optique en un signal électrique ;
obtenir un signal basse fréquence à partir du premier signal ;
dans lequel il est déterminé qu'une rétroréflexion optique n'est pas détectée, lorsqu'une fréquence du signal basse fréquence ne comprend qu'une première fréquence correspondant à de premières informations ; et il est déterminé que la rétroréflexion optique est détectée, lorsque la fréquence du signal basse fréquence comprend au moins une seconde fréquence correspondant à de secondes informations ;
**caractérisé en ce que** les premières informations sont des informations de service reçues par le premier module optique à partir d'un second module optique, et les secondes informations sont des informations de service envoyées par le premier module optique, et une même longueur d'onde est utilisée pour le premier module optique afin de recevoir les premières informations et envoyer les secondes informations ; dans lequel le premier module optique est configuré pour recevoir un signal basse fréquence avec la première fréquence et envoyer un signal basse fréquence avec la seconde fréquence.

5. Appareil selon la revendication 4, dans lequel le premier signal converti comprend un signal optique converti qui est de la première fréquence et qui est chargé sur les premières informations, ou le premier signal converti comprend le signal optique converti qui est de la première fréquence et qui est chargé sur les premières informations, et un signal optique converti qui est de la seconde fréquence et qui est chargé sur les secondes informations.

6. Appareil selon la revendication 4, comprenant en outre :
un module de commande, configuré pour envoyer un résultat de détection à un système de gestion de réseau, dans lequel le résultat de détection comprend le fait que la rétroréflexion optique n'est pas détectée ou que la rétroréflexion optique est détectée.

7. Module optique dans une communication par fibre optique comprenant l'appareil de détection de rétroréflexion optique selon l'une quelconque des revendications 4 à 6.

8. Dispositif de communication dans une communication par fibre optique comprenant le module optique selon la revendication 7.
